# EUROPÄISCHE PATENTANMELDUNG

(11) **EP 2 416 207 A1**
(43) Veröffentlichungstag der Anmeldung: **08.02.2012**
(21) Anmeldenummer: 10171874.0
(22) Anmeldetag: 04.08.2010
(51) Int. Cl.: G02F 1/01

(54) **Schaltbares optisches Modulationssystem**

(71) Anmelder: Bayer MaterialScience AG, 51368 Leverkusen (DE)
(72) Erfinder: Jenninger, Werner, 51368 Leverkusen (DE); Wagner, Joachim, 51368 Leverkusen (DE); Benecke, Carsten, 51368 Leverkusen (DE)

(57) **Zusammenfassung**

Die vorliegende Erfindung betrifft ein optisches Modulationssystem (1), umfassend einen zur Einkoppelung, Weiterleitung und Auskoppelung von Licht eingerichteten Lichtwellenleiter (2). Das System zeichnet sich dadurch aus, dass das Material des Lichtwellenleiters (2) ein dielektrisches Elastomer umfasst und das Modulationssystem weiterhin zwei an gegenüberliegenden Seiten des dielektrischen Elastomers angeordnete Elektroden (3, 4) umfasst. Zumindest teilweise zwischen den Elektroden (3, 4) und dem Lichtwellenleiter (2) sind Mantelbereiche (5, 6) angeordnet, deren Material einen niedrigeren Brechungsindex für Licht der im Lichtwellenleiter (2) weitergeleiteten Wellenlänge aufweist als das dielektrische Elastomer des Lichtwellenleiters (2). Die optische Weglänge in dem zwischen den Elektroden (3, 4) angeordneten dielektrischen Elastomer ist durch Anlegen einer elektrischen Spannung an die Elektroden (3, 4) veränderbar. Die Erfindung betrifft weiterhin ein Mach-Zehnder-Interferometer, umfassend ein erfindungsgemäßes optisches Modulationssystem, ein Verfahren zum Betreiben eines optisches Modulationssystems sowie dessen Verwendung.

## Beschreibung

Die vorliegende Erfindung betrifft ein optisches Modulationssystem, umfassend einen zur Einkoppelung, Weiterleitung und Auskoppelung von Licht eingerichteten Lichtwellenleiter. Sie betrifft weiterhin ein Mach-Zehnder-Interferometer, umfassend ein erfindungsgemäßes optisches Modulationssystem, ein Verfahren zum Betreiben eines optisches Modulationssystems sowie dessen Verwendung.

Schaltbare optische Strukturen sind für vielfältige Anwendungen interessant. Ein Weg zur Beeinflussung der optischen Eigenschaften einer Struktur nutzt die piezoelektrischen Eigenschaften bestimmter Materialien aus. In dieser Hinsicht beschreibt WO 2006/127285 A1 beispielsweise geschichtete Filme, die eine Kombination von piezoelektrischen Schichten, welche ihre Abmessungen bei Anlegen einer Spannung ändern und nicht-piezoelektrische Schichten aufweisen. Die geschichtete Struktur kann einen weiten Bereich elektrisch schaltbarer optischer Filme ausbilden. Diese Filme können in Anzeigen, Polarisationsfiltern, optischen Kompensatoren, ästhetischen Filmen und "heißen" und "kalten" Spiegeln, welche nur bestimmte Wellenlänge reflektieren, eingesetzt werden. Es werden auch monochromatische und Mehrfarbanzeigen offenbart, in welchen diese Filme Verwendung finden.

Ein Lichtleiter ist ein Körper oder eine Faser aus einem transparenten Material, meist Glas oder Kunststoff, die dem Transport von Licht oder Infrarotstrahlung dient. Kunststoff-Lichtwellenleiter zur Übertragung von Licht und Daten sind generell bekannt. Sie werden auch als polymere optische Fasern (POF) bezeichnet. In der Regel wird ihr Kern aus Polymethylmethacrylat gebildet.

In bestimmten Fällen kann die Brechzahl im Inneren eines Lichtleiters von Innen nach Außen abnehmen. Im Fall von Stufenindexfasern geschieht dieses sprunghaft und im Fall von Gradientenindexfasern kontinuierlich Üblicherweise wird dann um den Faserkern eine Hülle mit einer geringeren Brechzahl aufgetragen.

Optische Modulatoren mit elastomeren Wellenleitern werden beispielsweise in US 4,106,848 beschrieben. Dieses Patent betrifft optische Modulatoren und Verfahren zur Modulation von Licht unter Einführung von Licht aus einer Lichtquelle in einen optischen Lichtwellenleiter. Der Lichtwellenleiter wird aus einem Elastomerfilm gebildet, welcher durch Einwirkung einer mechanischen oder elektrostatischen Kraft seinen Querschnitt ändert. Hierdurch wird Licht moduliert, welches durch Lichtwellenleiter verläuft. Speziell wird ausgeführt, dass die Querschnittsänderung dazu führt, dass einige oder alle Moden des Lichts im Lichtwellenleiter-Film an der Deformationsstelle diskriminiert werden. Als Folge davon wird die Intensität des aus dem Film austretenden Lichts deutlich verringert. Derselbe prinzipielle Aufbau wird in einem optischen Signalverstärker gemäß US 4,050,027 eingesetzt.

Die Beeinflussung einer optischen Komponente durch das Anlegen einer elektrischen Spannung wird in US 2002/0186928 A1 behandelt. Es handelt sich um eine abstimmbare optische Vorrichtung zum Hinzufügen oder Entfernen eines oder mehrerer Kanäle in einem Kommunikationssystem nach dem Wellenlängenmultiplexverfahren. Die abstimmbare optische Vorrichtung umfasst einen oder mehrere Filter, wobei wenigstens ein Filter ein oder mehrere Elastimere und ein oder mehrere Gitter umfasst. Ein Elastimer ist hierbei ein Polymer, welches bei einer Spannungsänderung über das Polymer hinweg, oder aber wenn Licht einer bestimmten Wellenlänge am Gitter Beugung erfährt oder durch das Polymer geleitet wird, expandiert oder kontrahiert. Gemäß der Beschreibung in dieser Patentanmeldung ändert sich bei einer angelegten Spannung die Geometrie des Gitters.

Die im Stand der Technik genannten Lösungen für schaltbare Lichtwellenleiter sind jedoch weiter verbesserungswürdig. Insbesondere haben die in US 4,106,848 und US 4,050,027 vorgestellten Modulationssysteme den Nachteil, dass jedenfalls im Querschnitt gesehen punktuell auf den Lichtwellenleiterfilm eingewirkt wird, um die Strahlungsweiterleitung zu beeinflussen. Neben der mechanischen Belastung des Materials ist man in der Auswahl der Elastomere dahingehend eingeschränkt, dass sie bei den auftretenden Kräften auch eine Verformung zulassen. Ein weiterer Nachteil ist, dass mit diesem Prinzip die Elastomerfilmdicke auf solche Bereiche beschränkt ist, bei denen es noch zu einer Verformung kommen kann. Da die Anzahl der möglichen Moden in einem Lichtwellenleiter mit der Schichtdicke korreliert, stellt dieses eine Beschränkung dar.

Der Erfindung liegt die Aufgabe zugrunde, optische Modulationssysteme mit extern beeinflussbaren Lichtwellenleitern bereitzustellen, die die Übertragung einer größeren Anzahl von Moden ermöglichen.

Die Aufgabe wird erfindungsgemäß gelöst durch ein optisches Modulationssystem, umfassend einen zur Einkoppelung, Weiterleitung und Auskoppelung von Licht eingerichteten Lichtwellenleiter, welches sich dadurch auszeichnet, dass das Material des Lichtwellenleiters ein dielektrisches Elastomer umfasst und das Modulationssystem weiterhin zwei an gegenüberliegenden Seiten des dielektrischen Elastomers angeordnete Elektroden umfasst, wobei zumindest teilweise zwischen den Elektroden und dem Lichtwellenleiter Mantelbereiche angeordnet sind, deren Material einen niedrigeren Brechungsindex für Licht der im Lichtwellenleiter weitergeleiteten Wellenlänge aufweist als das dielektrische Elastomer des Lichtwellenleiters und wobei die optische Weglänge in dem zwischen den Elektroden angeordneten dielektrischen Elastomer durch Anlegen einer elektrischen Spannung an die Elektroden veränderbar ist.

Eine Klasse von Aktoren sind elektroaktive Polymere, wie sie unter anderem in WO 2001/06575 A1 erwähnt werden. Diese Patentanmeldung offenbart einen Energieumwandler, seine Verwendung sowie seine Herstellung. Der Energieumwandler wandelt mechanische Energie in elektrische Energie um. Einige der gezeigten Energieumwandler weisen vorgespannte Polymere auf. Die Vorspannung verbessert die Umwandlung zwischen elektrischer und mechanischer Energie. Darüber hinaus wird eine Vorrichtung offenbart, welche ein elektroaktives Polymer zur Umwandlung von elektrischer Energie in mechanische Energie umfasst. Des Weiteren werden Elektroden offenbart, welche an die Form des Polymers in dem Energieumwandler angepasst sind. Auch werden Verfahren zur Herstellung einer elektromechanischen Vorrichtung offenbart, welche ein oder mehrere elektroaktive Polymere umfasst.

Als Beispiel für den Einsatz dielektrischer Elastomere auf dem Gebiet der Optik sei WO 2009/104122 A1 genannt, welche eine Vorrichtung zur Erzeugung und Projektion von dynamischen Brennflächen zum Gegenstand hat, welche eine Lichtquelle und eine Einrichtung zur dynamischen Refraktion des eingestrahlten Lichts aufweist. Die Installation umfasst eine Effektoberfläche aus einem deformierbaren Material und ist mit Mitteln zur vorbestimmbaren Deformation ausgerüstet. Gemäß einer Ausführungsform kann die Effektoberfläche durch einen dielektrischen Elastomer-Aktor gebildet werden.

Beim Anlegen einer elektrischen Spannung an die Elektroden kommt es zu einer Längenausdehnung und Dickenkontraktion des dielektrischen Elastomers. Abhängig vom Material und der Wellenlänge des Lichts kann auch eine Änderung im Brechungsindex des Elastomers auftreten. Insgesamt ändert sich hierdurch die Ausbreitung von Licht unterschiedlicher Wellenlängen im dielektrischen Elastomer. Damit können zum Beispiel unterschiedliche Moden diskriminiert werden.

Der Vorteil des Einsatzes eines dielektrischen Elastomers liegt unter anderem in der verbesserten Möglichkeit, solch eine Dimensionsänderung verglichen mit einer rein mechanischen Einwirkung durch sich anziehende Elektroden zu verwirklichen. Bei einer größeren Schichtdicke des Elastomers lassen sich auch mehr Moden in einem Lichtwellenleiter übertragen.

Der Begriff "Licht" im Zusammenhang mit der vorliegenden Erfindung umfasst insbesondere sichtbares Licht, UV-Licht und IR-Licht. Das Einkoppeln des Lichts kann auf direktem Wege geschehen, indem eine Lichtquelle in den Querschnitt des Lichtwellenleiters einstrahlt. Alternativ lässt sich eine Einkoppelung auch beispielsweise über geeignete Prismen oder Gitter bewerkstelligen. Dasselbe gilt für das Auskoppeln des Lichts am anderen Ende des Lichtwellenleiters.

Der Lichtwellenleiter kann vorzugsweise ein rundes, elliptisches, quadratisches oder rechteckiges Querschnittsprofil aufweisen.

Die Mantelbereiche können sowohl in der Art eines Gradientenindexes Teil des elastomeren Lichtwellenleiters als auch in der Art eines Stufenindexes diskrete Mantelschichten sein. Als Mantelschichten können beispielsweise Polymere eingesetzt werden, die auch in polymeren optischen Fasern als Mantelschicht ("cladding") dienen.

Weitere Bestandteile des optischen Modulationssystems können eine Lichtquelle, ein Detektor und elektronische Schaltkreise zur Ansteuerung und Auswertung der Lichtsignale und der Elektroden sein. Ein Beispiel für geeignete Lichtquellen sind Laserdioden; ein Beispiel für geeignete Detektoren sind Photodioden.

Im Gegensatz zu Bauteilen in Interferometern wie beispielsweise Fabry-Perot-Interferometern sind in den L ichtwellenleitern des erfindungsgemäßen optischen Modulationssystems keine Resonanzbedingungen vorgesehen, die zu konstruktiven und destruktiven Interferenzen innerhalb des eingestrahlten Lichts führen. Die Ausbreitung von Moden ist anschaulich an die Bedingung der totalen Reflektion an der Berandung des Wellenleiters geknüpft. In diesem Fall werden im Strahlenmodell nur Lichtstrahlen weitergeleitet, die an den Grenzflächen totalreflektiert werden, also oberhalb des Brewsterwinkels liegen. Strahlen, die unterhalb des Winkels liegen und reflektiert werden, können konstruktiv/destruktiv interferieren, werden aber nicht im Sinne Wellenleitung geführt.

Ausführungsformen der Erfindung werden nachfolgend geschildert, wobei die einzelnen Ausführungsformen in beliebiger Weise miteinander kombiniert werden können.

In einer Ausführungsform des erfindungsgemäßen optischen Modulationssystems ist das Elastomer ausgewählt aus der Gruppe umfassend Polyurethan-Elastomere, Silikon-Elastomere und/oder Acrylat-Elastomere. Bevorzugt sind hierbei Polyurethan-Elastomere. Diese können durch Umsetzung eines Polyisocyanats A) und/oder eines Polyisocyanat-Prepolymers B) mit mindestens einer difunktionellen, gegenüber Isocyanatgruppen reaktiven Verbindung C) in Anwesenheit eines in der Polyurethanchemie üblichen Katalysators D) hergestellt werden.

Als Polyisocyanat A) eignen sich beispielsweise 1,4-Butylendiisocyanat, 1,6-Hexamethylendiisocyanat (HDI), Isophorondiisocyanat (IPDI), 2,2,4 und/oder 2,4,4-Trimethylhexamethylendiisocyanat, die isomeren Bis-(4,4`-isocyanatocyclohexyl)methane oder deren Mischungen beliebigen Isomerengehalts, 1,4-Cyclohexylendiisocyanat, 4-Isocyanatomethyl-1,8-octandiisocyanat (Nonantriisocyanat), 1,4-Phenylendiisocyanat, 2,4- und/oder 2,6-Toluylendiisocyanat, 1,5-Naphthylendiisocyanat, 2,2`- und/oder 2,4`- und/oder 4,4`-Diphenylmethandiisocyanat, 1,3- und/oder 1,4-Bis-(2-isocyanato-prop-2-yl)-benzol (TMXDI), 1,3-Bis(isocyanatomethyl)benzol (XDI), Alkyl-2,6-diisocyanatohexanoate (Lysindüsocyanate) mit Alkylgruppen mit 1 bis 8 Kohlenstoffatomen sowie Mischungen davon. Weiterhin sind Uretdion-, Isocyanurat-, Biuret-, Iminooxadiazindion- oder Oxadiazintrionstruktur enthaltende Verbindungen basierend auf den genannten Diisocyanaten geeignete Bausteine der Komponente A).

Vorzugsweise kann die Komponente A) ein Polyisocyanat oder ein Polyisocyanatgemisch mit einer mittleren NCO-Funktionalität von 2 bis 4 mit ausschließlich aliphatisch oder cycloaliphatisch gebundenen Isocyanatgruppen sein. Bevorzugt handelt es sich um Polyisocyanate oder Polyisocyanatgemische der vorstehend genannten Art mit Uretdion-, Isocyanurat-, Biuret-, Iminooxadiazindion- oder Oxadiazintrionstruktur sowie Mischungen daraus und einer mittleren NCO-Funktionalität der Mischung von 2 bis 4, bevorzugt von 2 bis 2,6 und besonders bevorzugt von 2 bis 2,4.

Die als Komponente B) einsetzbaren Polyisocyanat-Prepolymere können durch Umsetzung von einem oder mehreren Diisocyanaten mit einem oder mehreren hydroxyfunktionellen, insbesondere polymeren, Polyolen gegebenenfalls unter Zusatz von Katalysatoren sowie Hilfs- und Zusatzstoffen erhalten werden. Des Weiteren können zusätzlich Komponenten zur Kettenverlängerung, wie beispielsweise mit primären und/oder sekundären Aminogruppen (NH₂- und/oder NH-funktionelle Komponenten) für die Bildung des Polyisocyanat-Prepolymers eingesetzt werden.

Das Polyisocyanat-Prepolymer als Komponente B) kann bevorzugt aus der Umsetzung von polymeren Polyolen und aliphatischen Diisocyanaten erhältlich sein. Hydroxyfunktionelle, polymere Polyole für die Umsetzung zum Polyisocyanat-Prepolymer B) können beispielsweise Polyesterpolyole, Polyacrylatpolyole, Polyurethanpolyole, Polycarbonatpolyole, Polyetherpolyole, Polyesterpolyacrylatpolyole, Polyurethanpolyacrylatpolyole, Polyurethanpolyesterpolyole, Polyurethanpolyetherpolyole, Polyurethanpolycarbonatpolyole und/oder Polyesterpolycarbonatpolyole sein. Diese können zur Herstellung des Polyisocyanat-Prepolymers einzeln oder in beliebigen Mischungen untereinander eingesetzt werden.

Geeignete Polyesterpolyole zur Herstellung der Polyisocyanat-Prepolymere B) können Polykondensate aus Di- sowie gegebenenfalls Tri- und Tetraolen und Di- sowie gegebenenfalls Tri-und Tetracarbonsäuren oder Hydroxycarbonsäuren oder Lactonen sein. Anstelle der freien Polycarbonsäuren können auch die entsprechenden Polycarbonsäureanhydride oder entsprechende Polycarbonsäureester von niederen Alkoholen zur Herstellung der Polyester verwendet werden.

Beispiele für geeignete Diole sind dabei Ethylenglykol, Butylenglykol, Diethylenglykol, Triethylenglykol, Polyalkylenglykole wie Polyethylenglykol, weiterhin 1,2-Propandiol, 1,3-Propandiol, Butandiol(1,3), Butandiol(1,4), Hexandiol(1,6) und Isomere, Neopentylglykol oder Hydroxypivalinsäureneopentylglykolester oder Mischungen davon, wobei Hexandiol(1,6) und Isomere, Butandiol(1,4), Neopentylglykol und Hydroxypivalinsäureneopentylglykolester bevorzugt sind. Daneben können auch Polyole wie Trimethylolpropan, Glycerin, Erythrit, Pentaerythrit, Trimethylolbenzol oder Trishydroxyethylisocyanurat oder Mischungen davon eingesetzt werden.

Als Dicarbonsäuren können dabei Phthalsäure, Isophthalsäure, Terephthalsäure, Tetrahydrophthalsäure, Hexahydrophthalsäure, Cyclohexandicarbonsäure, Adipinsäure, Azelainsäure, Sebacinsäure, Glutarsäure, Tetrachlorphthalsäure, Maleinsäure, Fumarsäure, Itaconsäure, Malonsäure, Korksäure, 2-Methylbernsteinsäure, 3,3-Diethylglutarsäure und/oder 2,2-Dimethylbernsteinsäure eingesetzt werden. Als Säurequelle können auch die entsprechenden Anhydride verwendet werden.

Sofern die mittlere Funktionalität des zu veresternden Polyols ≥ 2 ist, können zusätzlich auch Monocarbonsäuren, wie Benzoesäure und Hexancarbonsäure mit verwendet werden.

Bevorzugte Säuren sind aliphatische oder aromatische Säuren der vorstehend genannten Art. Besonders bevorzugt sind dabei Adipinsäure, Isophthalsäure und Phthalsäure.

Hydroxycarbonsäuren, die als Reaktionsteilnehmer bei der Herstellung eines Polyesterpolyols mit endständigen Hydroxylgruppen mitverwendet werden können, sind beispielsweise Hydroxycapronsäure, Hydroxybuttersäure, Hydroxydecansäure oder Hydroxystearinsäure oder Mischungen davon. Geeignete Lactone sind Caprolacton, Butyrolacton oder Homologe oder Mischungen davon. Bevorzugt ist dabei Caprolacton.

Ebenfalls können zur Herstellung der Polyisocyanat-Prepolymere B) Hydroxylgruppen aufweisende Polycarbonate, beispielsweise Polycarbonatpolyole, bevorzugt Polycarbonatdiole, eingesetzt werden. Beispielsweise können diese ein zahlenmittleres Molekulargewicht Mₙ von 400 g/mol bis 8000 g/mol, bevorzugt von 600 g/mol bis 3000 g/mol haben. Diese können durch Reaktion von Kohlensäurederivaten, wie Diphenylcarbonat, Dimethylcarbonat oder Phosgen, mit Polyolen, bevorzugt Diolen, erhalten werden.

Beispiele hierfür geeigneter Diole sind Ethylenglykol, 1,2- und 1,3-Propandiol, 1,3- und 1,4-Butandiol, 1,6-Hexandiol, 1,8-Octandiol, Neopentylglykol, 1,4-Bishydroxymethylcyclohexan, 2-Methyl-1,3-propandiol, 2,2,4-Trimethylpentandiol-1,3, Dipropylenglykol, Polypropylenglykole, Dibutylenglykol, Polybutylenglykole, Bisphenol A oder lactonmodifizierte Diole der vorstehend genannten Art oder Mischungen davon.

Bevorzugt enthält dann die Diolkomponente dabei von 40 Gewichtsprozent bis 100 Gewichtsprozent Hexandiol, vorzugsweise 1,6-Hexandiol und/oder Hexandiolderivate. Solche Hexandiolderivate basieren auf Hexandiol und können neben endständigen OH-Gruppen Ester- oder Ethergruppen aufweisen. Derartige Derivate sind beispielsweise durch Reaktion von Hexandiol mit überschüssigem Caprolacton oder durch Veretherung von Hexandiol mit sich selbst zum Di- oder Trihexylenglykol erhältlich. Die Menge dieser und anderer Komponenten werden derart gewählt, dass die Summe 100 Gewichtsprozent nicht überschreitet, insbesondere 100 Gewichtsprozent ergibt.

Hydroxylgruppen aufweisende Polycarbonate, insbesondere Polycarbonatpolyole, sind bevorzugt linear gebaut.

Ebenfalls können zur Herstellung der Polyisocyanat-Prepolymere B) Polyetherpolyole eingesetzt werden. Beispielsweise eignen sich Polytetramethylenglykolpolyether wie sie durch Polymerisation von Tetrahydrofuran mittels kationischer Ringöffnung erhältlich sind. Ebenfalls geeignete Polyetherpolyole können die Additionsprodukte von Styroloxid, Ethylenoxid, Propylenoxid, Butylenoxid und/oder Epichlorhydrin an di- oder polyfunktionelle Startermoleküle sein. Als geeignete Startermoleküle können beispielsweise Wasser, Butyldiglykol, Glycerin, Diethylenglykol, Trimethyolpropan, Propylenglykol, Sorbit, Ethylendiamin, Triethanolamin, oder 1,4-Butandiol oder Mischungen davon eingesetzt werden.

Bevorzugte Komponenten zur Herstellung der Polyisocyanat-Prepolymere B) sind Polypropylenglykol, Polytetramethylenglykolpolyether und Polycarbonatpolyole beziehungsweise deren Mischungen, wobei Polypropylenglykol besonders bevorzugt ist.

Dabei können polymere Polyole mit einem zahlenmittleren Molekulargewicht Mₙ von 400 g/mol bis 8000 g/mol, bevorzugt von 400 g/mol bis 6000 g/mol und besonders bevorzugt von 600 g/mol bis 3000 g/mol eingesetzt werden. Diese weisen bevorzugt eine OH-Funktionalität von 1,5 bis 6, besonders bevorzugt von 1,8 bis 3, ganz besonders bevorzugt von 1,9 bis 2,1 auf.

Neben den genannten polymeren Polyolen können auch kurzkettige Polyole bei der Herstellung der Polyisocyanat-Prepolymere B) eingesetzt werden. Beispielsweise kann Ethylenglykol, Diethylenglykol, Triethylenglykol, 1,2-Propandiol, 1,3-Propandiol, 1,4-Butandiol, 1,3-Butylenglykol, Cyclohexandiol, 1,4-Cyclohexandimethanol, 1,6-Hexandiol, Neopentylglykol, Hydrochinondihydroxyethylether, Bisphenol A (2,2-Bis(4-hydroxyphenyl)propan), hydriertes Bisphenol A (2,2-Bis(4-hydroxycyclohexyl)propan), Trimethylolpropan, Trimethylolethan, Glycerin oder Pentaerythrit oder eine Mischung davon eingesetzt werden.

Geeignet sind auch Esterdiole des genannten Molekulargewichtsbereichs wie α-Hydroxybutyl-ε-hydroxy-capronsäureester, (ω-Hydroxyhexyl-v-hydroxybuttersäureester, Adipinsäure-(β-hydroxyethyl)ester oder Terephthalsäurebis(β-hydroxyethyl)ester.

Ferner können zur Herstellung der Polyisocyanat-Prepolymere B) auch monofunktionelle isocyanatreaktive hydroxylgruppenhaltige Verbindungen eingesetzt werden. Beispiele solcher monofunktionellen Verbindungen sind Ethanol, n-Butanol, Ethylenglykolmonobutylether, Diethylenglykolmonomethylether, Diethylenglykolmonobutylether, Propylenglykolmonomethylether, Dipropylenglykol-monomethylether, Tripropylenglykolmonomethylether, Dipropylenglykolmonopropylether, Propylenglykolmonobutylether, Dipropylenglykolmonobutylether, Tripropylenglykolmonobutylether, 2-Ethylhexanol, 1-Octanol, 1-Dodecanol oder 1-Hexadecanol oder Mischungen davon.

Zur Herstellung der Polyisocyanat-Prepolymere B) können vorzugsweise Diisocyanate mit den Polyolen bei einem Verhältnis der Isocyanatgruppen zu Hydroxylgruppen (NCO/OH-Verhältnis) von 2:1 bis 20:1, beispielsweise von 8:1, umgesetzt werden. Dabei können Urethan- und/oder Allophanatstrukturen gebildet werden. Ein Anteil an nicht umgesetzten Polyisocyanaten kann anschließend abgetrennt werden. Hierfür kann beispielsweise eine Dünnschichtdestillation verwendet werden, wobei restmonomerenarme Produkte mit Restmonomergehalten von beispielsweise ≤ 1 Gewichtsprozent, bevorzugt ≤ 0,5 Gewichtsprozent, besonders bevorzugt ≤ 0,1 Gewichtsprozent, erhalten werden. Die Reaktionstemperatur kann dabei von 20 °C bis 120 °C, bevorzugt von 60 °C bis 100 °C, betragen. Gegebenenfalls können während der Herstellung Stabilisatoren wie Benzoylchlorid, Isophthaloylchlorid, Dibutylphosphat, 3-Chlorpropionsäure oder Methyltosylat zugesetzt werden.

Weiterhin können NH₂- und/oder NH-funktionelle Komponenten zusätzlich zur Kettenverlängerung bei der Herstellung der Polyisocyanat-Prepolymere B) eingesetzt werden.

Geeignete Komponenten zur Kettenverlängerung sind organische Di- oder Polyamine. Beispielsweise können Ethylendiamin, 1,2- Diaminopropan, 1,3-Diaminopropan, 1,4-Diaminobutan, 1,6-Diaminohexan, Isophorondiamin, Isomerengemische von 2,2,4- und 2,4,4-Trimethylhexamethylendiamin, 2-Methylpentamethylendiamin, Diethylentriamin, Diaminodicyclohexylmethan oder Dimethylethylendiamin oder Mischungen davon eingesetzt werden.

Darüber hinaus können auch Verbindungen, die neben einer primären Aminogruppe auch sekundäre Aminogruppen oder neben einer Aminogruppe (primär oder sekundär) auch OH-Gruppen aufweisen, zur Herstellung der Polyisocyanat-Prepolymere B) eingesetzt werden. Beispiele hierfür sind primäre/sekundäre Amine, wie Diethanolamin, 3-Amino-1-methylaminopropan, 3-Amino-1-ethylaminopropan, 3-Amino-1-cyclohexylaminopropan, 3-Amino-1-methylaminobutan, Alkanolamine wie N-Aminoethylethanolamin, Ethanolamin, 3-Aminopropanol, Neopentanolamin. Zur Kettenterminierung werden üblicherweise Amine mit einer gegenüber Isocyanaten reaktiven Gruppe wie Methylamin, Ethylamin, Propylamin, Butylamin, Octylamin, Laurylamin, Stearylamin, Isononyloxypropylamin, Dimethylamin, Diethylamin, Dipropylamin, Dibutylamin, N-Methylaminopropylamin, Diethyl(methyl)aminopropylamin, Morpholin, Piperidin, beziehungsweise geeignete substituierte Derivate davon, Amidamine aus diprimären Aminen und Monocarbonsäuren, Monoketimine von diprimären Aminen, primär/tertiäre Amine, wie N,N-Dimethylaminopropylamin, verwendet.

Die als Komponente B) eingesetzten Polyisocyanat-Prepolymere oder deren Mischungen können bevorzugt eine mittlere NCO-Funktionalität von 1,8 bis 5, besonders bevorzugt 2 bis 3,5 und ganz besonders bevorzugt 2 bis 3 aufweisen.

Die Komponente C) ist eine Verbindung mit mindestens zwei isocyanatreaktiven funktionellen Gruppen. Beispielsweise kann Komponente C) ein Polyamin oder ein Polyol mit mindestens zwei isocyanatreaktiven Hydroxygruppen sein.

Als Komponente C) können hydroxyfunktionelle, insbesondere polymere, Polyole, beispielsweise Polyetherpolyole oder Polyesterpolyole eingesetzt werden. Geeignete Polyole wurden bereits vorstehend im Zusammenhang mit der Herstellung des Prepolymers B) geschildert, so dass zur Vermeidung von Wiederholungen hierauf Bezug genommen wird.

Es ist bevorzugt, dass die Komponente C) ein Polymer mit 2 bis 4 Hydroxygruppen pro Molekül, ganz besonders bevorzugt ein Polypropylenglykol mit 2 bis 3 Hydroxygruppen pro Molekül ist.

Es ist günstig, wenn die polymeren Polyole C) eine besonders enge Molekulargewichtsverteilung, das heißt eine Polydispersität (PD = Mw/Mn) von 1,0 bis 1,5 aufweisen. Bevorzugt weisen beispielsweise Polyetherpolyole eine Polydispersität von 1,0 bis 1,5 und eine OH-Funktionalität von größer 1,9 auf, und besonders bevorzugt größer oder gleich 1,95 auf.

Solche Polyetherpolyole sind in an sich bekannter Weise durch Alkoxylierung von geeigneten Starter-Molekülen, insbesondere unter Verwendung von Doppelmetallcyanid-Katalysatoren (DMC-Katalyse) herstellbar. Diese Methode ist zum Beispiel in der Patentschrift US 5,158,922 und der Offenlegungsschrift EP 0 654 302 A1 beschrieben.

Die Reaktionsmischung für das Polyurethan kann durch Mischen der Komponenten A) und/oder B) und C) erhalten werden. Das Verhältnis von isocyanatreaktiven Hydroxygruppen zu freien Isocyanatgruppen ist dabei vorzugsweise von 1:1,5 bis 1,5:1 besonders bevorzugt von 1:1,02 bis 1:0,95.

Vorzugsweise besitzt zumindest eine der Komponenten A), B) oder C) eine Funktionalität von ≥ 2,0, bevorzugt von ≥ 2,5 bevorzugt von ≥ 3,0, um in das Polymerelement eine Verzweigung oder eine Vernetzung einzuführen. Der Begriff "Funktionalität" bezieht sich bei Komponente A) und B) auf die mittlere Anzahl von NCO-Gruppen pro Molekül und bei Komponente C) auf die mittlere Anzahl von OH-, NH- oder NH₂- Gruppen pro Molekül. Diese Verzweigung beziehungsweise Vernetzung bewirkt bessere mechanische Eigenschaften und bessere elastomere Eigenschaften, insbesondere auch bessere Dehnungseigenschaften.

Das erhaltene Polyurethanpolymer kann vorzugsweise eine maximale Spannung von ≥ 0,2 MPa, insbesondere von 0,4 MPa bis 50 MPa, und eine maximale Dehnung von ≥ 100 %, insbesondere von ≥ 120 %, aufweisen. Darüber hinaus kann das Polyurethan im Dehnungsbereich von 50 % bis 200 % eine Spannung von 0,1 MPa bis 1 MPa, beispielsweise von 0,1 MPa bis 0,8MPa, insbesondere von 0,1 MPa bis 0,3 MPa, aufweisen (Bestimmung nach ASTM D 412). Ferner kann das Polyurethan ein Elastizitätsmodul bei einer Dehnung von 100 % von 0,1 MPa bis 10 MPa, beispielsweise von 1 MPa bis 8 MPa, aufweisen (Bestimmung nach ASTM D 412).

Vorzugsweise ist das erhaltene Polyurethanpolymer ein dielektrisches Elastomer mit einem spezifischen elektrischen Volumenwiderstand gemäß ASTM D 257 von ≥ 10¹² bis ≤ 10¹⁷ Ohm cm. Es ist weiterhin möglich, dass das Polyurethanpolymer eine Dielektrizitätskonstante gemäß ASTM 150-98 von ≥ 5 bis ≤ 10 und eine dielektrische Durchbruchsfeldstärke gemäß ASTM 149-97a von ≥ 100 V/µm bis ≤ 200 V/µm aufweist. Grundsätzlich wird eine maximale Dielektrizitätskonstante angestrebt, um die Gebrauchsfähigkeit des Polymers zu optimieren.

Die Reaktionsmischung zur Herstellung des Polyurethans kann neben den Komponenten A), B), C) und D) zusätzlich auch Hilfs- und Zusatzstoffe enthalten. Beispiele für solche Hilfs- und Zusatzstoffe sind Vernetzer, Verdicker, Lösemittel, Thixotropiermittel, Stabilisatoren, Antioxidantien, Lichtschutzmittel, Emulgatoren, Tenside, Klebstoffe, Weichmacher, Hydrophobierungsmittel, Pigmente, Füllstoffe und Verlaufshilfsmittel. Bevorzugte Lösungsmittel sind Methoxypropylacetat und Ethoxypropylacetat. Bevorzugte Verlaufshilfsmittel sind Polyacrylate, insbesondere aminharzmodifizierte Acrylcopolymerisate.

Füllstoffe können beispielsweise die Dielektrizitätskonstante des Polymerelements regulieren. Vorzugsweise umfasst die Reaktionsmischung Füllstoffe zur Erhöhung der Dielektrizitätskonstanten wie Füllstoffe mit einer hohen Dielektrizitätskonstante. Beispiele hierfür sind keramische Füllstoffe, insbesondere Bariumtitanat, Titandioxid und piezoelektrische Keramiken wie Quarz oder Bleizirkoniumtitanat, sowie organische Füllstoffe, insbesondere solche mit einer hohen elektrischen Polarisierbarkeit, beispielsweise Phthalocyanine.

Außerdem ist eine hohe Dielektrizitätskonstante auch durch das Einbringen elektrisch leitfähiger Füllstoffe unterhalb der Perkolationsschwelle erzielbar. Beispiele hierfür sind Ruß, Graphit, einwandige oder mehrwandige Kohlenstoff-Nanoröhrchen, elektrisch leitfähige Polymere wie Polythiophene, Polyaniline oder Polypyrrole, oder Mischungen davon. In diesem Zusammenhang sind insbesondere solche Rußtypen von Interesse, die eine Oberflächenpassivierung aufweisen und deshalb bei niedrigen Konzentrationen unterhalb der Perkolationsschwelle zwar die Dielektrizitätskonstante erhöhen und trotzdem nicht zu einer Erhöhung der Leitfähigkeit des Polymers führen.

Hinsichtlich der Füllstoffe versteht es sich, dass darauf zu achten ist, dass sie nicht die optischen Eigenschaften des Elastomers bis hin zur Unbrauchbarkeit beeinträchtigen.

Angemerkt sei, dass die Begriffe "ein" und "eine" im Zusammenhang mit der vorliegenden Erfindung und insbesondere mit den Komponenten A), B) und C) nicht als Zahlwörter, sondern als unbestimmter Artikel verwendet werden, sofern der Kontext nicht eindeutig eine andere Aussage ergibt.

In einer weiteren Ausführungsform des erfindungsgemäßen optischen Modulationssystems ist das Material der Elektroden ausgewählt aus der Gruppe umfassend Metalle, Metalllegierungen, leitfähige Oligo- oder Polymere, leitfähige Oxide (zum Beispiel Indium-Zinn-Oxide ITO) und mit leitfähigen Füllstoffen gefüllten Polymeren oder Kombinationen daraus.

Als leitfähige Oligo- oder Polymere können beispielsweise Polythiophene, Polyaniline oder Polypyrrole eingesetzt werden. Als Füllstoffe für mit leitfähigen Füllstoffen gefüllte Polymere können beispielsweise Metalle, leitfähige Kohlenstoff basierte Materialien, wie Ruß, Kohlenstoff Nanoröhrchen (carbon nanotubes, CNT) oder leitfähige Oligo- oder Polymere eingesetzt werden. Der Füllstoffgehalt der Polymere liegt dabei vorzugsweise oberhalb der Perkolationsschwelle, so dass die leitfähigen Füllstoffe durchgehend elektrisch leitfähige Pfade innerhalb der mit leitfähigen Füllstoffen gefüllten Polymere ausbilden.

In einer weiteren Ausführungsform des erfindungsgemäßen optischen Modulationssystems sind die Elektroden zumindest teilweise in direktem Kontakt mit dem dielektrischen Elastomer des Lichtwellenleiters angeordnet. Weiterhin weist dann das Material der Elektroden einen niedrigeren Brechungsindex für Licht der im Lichtwellenleiter weitergeleiteten Wellenlänge auf als das dielektrische Elastomer des Lichtwellenleiters. Dann übernehmen die Elektroden die Funktion einer äußeren Schicht des Lichtwellenleiters, so dass durch Totalreflektion Lichtstrahlen weitergeleitet werden können.

In einer weiteren Ausführungsform des erfindungsgemäßen optischen Modulationssystems ist am Ort des Einkoppelns von Licht in den Lichtwellenleiter und/oder am Ort des Auskoppelns von Licht aus dem Lichtwellenleiter ein Spalt zwischen dem Lichtwellenleiter und dem übrigen Modulationssystem vorgesehen. Insbesondere kann der Spalt zwischen dem Lichtwellenleiter und einer Lichtquelle und/oder einem Detektor vorgesehen sein. Durch eine Dimensionsänderung des dielektrischen Elastomers beim Anlegen einer elektrischen Spannung ändert sich der Abstand zur Lichtquelle und/oder dem Detektor. Auf diese Weise kann Effizienz des Einkoppelns oder Auskoppelns beeinflusst werden.

Die vorliegende Erfindung betrifft ebenfalls ein Mach-Zehnder-Interferometer, umfassend ein erfindungsgemäßes optisches Modulationssystem. In einem Mach-Zehnder-Interferometer wird ein aus einer geeigneten Lichtquelle kommender kohärenter Lichtstrahl beispielsweise durch einen teildurchlässigen Spiegel in zwei Teilstrahlen aufgespalten. Diese Teilstrahlen durchlaufen unterschiedliche Wegstrecken, werden beispielsweise durch Spiegel abgelenkt und werden dann wieder zusammengeführt, wodurch sie sich überlagern. Durch die Überlagerung der Lichtwellen entsteht ein Interferenzbild.

Ändert sich nun für einen der Teilstrahlen die optische Weglänge, welche das Produkt aus der Brechzahl des Mediums, in dem sich der Lichtstrahl bewegt und der geometrischen Weglänge ist, erfährt dieser Teilstrahl eine Phasenverschiebung gegenüber dem ungestörten Teilstrahl. Daraus resultiert eine Änderung des Interferenzbildes der sich überlagernden Teilstrahlen nach deren Zusammenführung, aus welcher Rückschlüsse auf die Änderung der optischen Weglänge gezogen werden können.

Im erfindungsgemäßen Mach-Zehnder-Interferometer kann nun ein wie zuvor beschriebenes optisches Modulationssystem im Strahlengang eines Teilstrahls angeordnet sein. Es ist natürlich auch möglich, dass in beiden Strahlengängen der Teilstrahlen jeweils solche Modulationssysteme angeordnet sind. Durch das Anlegen einer elektrischen Spannung an die Elektroden kann dann eine optische Weglängendifferenz erzeugt werden.

Ein weiterer Gegenstand der vorliegenden Erfindung ist ein Verfahren zum Betreiben eines optischen Modulationssystems, umfassend die Schritte:
Bereitstellen eines erfindungsgemäßen optischen Modulationssystems;
Einkoppeln von Licht in den Lichtwellenleiter; und
Anlegen einer elektrischen Spannung an das dielektrische Elastomer des Lichtwellenleiters mittels der Elektroden, wobei die elektrische Spannung ausreichend ist, um eine Veränderung der Schichtdicke und/oder des Brechungsindexes des Lichtwellenleiters zu bewirken. Vorzugsweise ist der hierbei betrachtete Brechungsindex n_{D} derjenige des Elastomers bei einer Wellenlänge von 589 nm.

In einer weiteren Ausführungsform des erfindungsgemäßen Verfahrens umfasst das eingekoppelte Licht zwei Intensitätsmaxima mit einer ersten Wellenlänge λ₁ und einer zweiten Wellenlänge λ₂, wobei beim Anlegen einer ersten elektrischen Spannung an das dielektrische Elastomer des Lichtwellenleiters die Transmission des Lichtwellenleiters für Licht der Wellenlänge λ₁ größer ist als für Licht der Wellenlänge λ₂ ist und wobei beim Anlegen einer zweiten, von der ersten verschiedenen elektrischen Spannung an das dielektrische Elastomer des Lichtwellenleiters die Transmission des Lichtwellenleiters für Licht der Wellenlänge λ₂ größer ist als für Licht der Wellenlänge λ₁ ist. Die erste elektrische Spannung kann auch den Wert Null annehmen.

Auf diese Weise kann ein diskriminierender Lichtwellenleiter erreicht werden. In einem Zustand (keine oder eine erste Spannung angelegt) kann vorrangig oder ausschließlich Licht einer ersten Wellenlänge den Lichtwellenleiter passieren. Durch Anlegen der zweiten Spannung wird der Wellenleiter in den zweiten Zustand geschaltet und das Licht der zweiten Wellenlänge kann vorrangig oder ausschließlich passieren. Insbesondere eignet sich diese Betriebsweise für benachbarte, schmalbandige Eingangssignale.

In einer weiteren Ausführungsform des erfindungsgemäßen Verfahrens ist die an das dielektrische Elastomer des Lichtwellenleiters angelegte elektrische Spannung während des Betriebes des optischen Modulationssystems zeitlich veränderlich. In dieser Betriebsweise kann ein optisches Signal hinsichtlich seiner Intensität moduliert werden. Insbesondere kann die angelegte Spannung in einen Regelkreis eingebunden sein.

Ein weiterer Gegenstand der vorliegenden Erfindung ist die Verwendung eines erfindungsgemäßen optischen Modulationssystems oder eines erfindungsgemäßen Interferometers als durchstimmbares Interferenzfilter, optischer Schalter und/oder Intensitätsmodulator. In einer bevorzugten Verwendung erfolgt die Verwendung als Intensitätsmodulator in einer Laseranordnung.

Die vorliegende Erfindung wird anhand der nachfolgenden Zeichnungen weiter erläutert, ohne jedoch darauf beschränkt zu sein.
- FIG. 1: zeigt den schematischen Aufbau eines optischen Modulationssystems
- FIG. 2: zeigt den schematischen Aufbau eines optischen Modulationssystems in anderer Darstellung
- FIG. 3: zeigt den schematischen Aufbau eines weiteren optischen Modulationssystems
- FIG. 4: zeigt den schematischen Aufbau eines weiteren optischen Modulationssystems in anderer Darstellung
- FIG.: 5 zeigt ein Mach-Zehnder-Interferometer

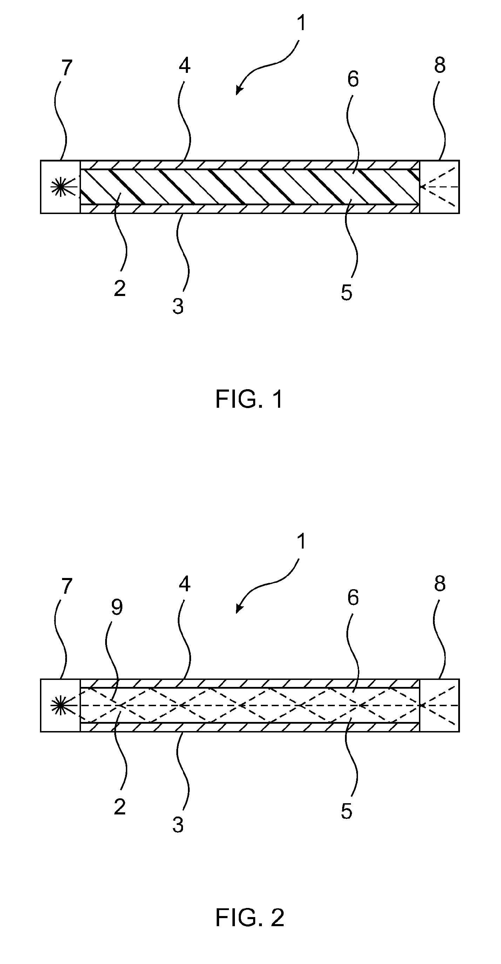

FIG. 1 zeigt den schematischen Aufbau eines optischen Modulationssystems 1 mit einem Lichtwellenleiter 2 aus einem dielektrischen Elastomer. Das Elastomer ist unmittelbar durch Elektroden 3, 4 kontaktiert, über die mittels einer nicht dargestellten elektrischen Schaltung eine Spannung angelegt werden kann. Im vorliegenden Fall ist der Lichtwellenleiter 2 in Gradientenindexform ausgeführt. Die Mantelbereiche 5 und 6 innerhalb des Lichtwellenleiters 2 weisen einen niedrigeren Brechungsindex für Licht der weiterzuleitenden Wellenlänge auf als das Innere des Lichtwellenleiters 2.

Eine Lichtquelle 7 koppelt Lichtstrahlung in den Lichtwellenleiter 2 ein. Dieses Licht wird weitergeleitet und am anderen Ende des Lichtwellenleiters 2 ausgekoppelt, wo es von einem Detektor 8 registriert wird.

Beim Anlegen einer elektrischen Spannung an die Elektroden 3, 4 kontrahiert das dielektrische Elastomer des Lichtwellenleiters 2 in seiner Dicke und dehnt sich gleichzeitig in seiner Längsrichtung aus. Insgesamt ändern sich also die Abmessungen des Lichtwellenleiters 2 und, je nach verwendetem Material und Wellenlänge des eingekoppelten Lichts, auch dessen Brechungsindex. Auf diese Weise wird die Ausbreitung des Lichts unterschiedlicher Wellenlängen beeinflusst. Dadurch können zum Beispiel unterschiedliche Moden diskriminiert werden.

FIG. 2 zeigt dasselbe optische Modulationssystem wie in FIG. 1, wobei zur besseren Übersicht die Schraffur für das Material der dielektrischen Elastomerschicht des Lichtwellenleiters 2 ausgelassen wurde und dafür schematisch Reflexionen des Lichtstrahls innerhalb des Lichtwellenleiters 2 aufgezeigt werden. Bedingt durch den niedrigeren Brechungsindex der Mantelbereiche 5 und 6 kommt es zu Reflexionen des eingekoppelten Lichts 9 und in Folge dessen zur Weiterleitung des Lichts innerhalb des Lichtwellenleiters 2.

In dem in FIG. 1 und FIG. 2 gezeigten Modulationssystem sind Lichtquelle 5 und Detektor 6 unmittelbar an den Lichtwellenleiter 2 angrenzend angeordnet. Es ist jedoch ebenfalls möglich, dass sie beide oder auch nur eine der beiden Komponenten zum Lichtwellenleiter 2 beabstandet angeordnet, so dass ein Spalt gebildet wird. Wird eine Spannung an die Elektroden 3, 4 angelegt, so dass das dielektrische Elastomer des Lichtwellenleiters 2 eine Längenausdehnung erfährt, verkleinert sich der Spalt. Durch Variation der Spaltgröße kann die Einkoppel- und/oder Auskoppeleffizienz des Lichtwellenleiters beeinflusst werden.

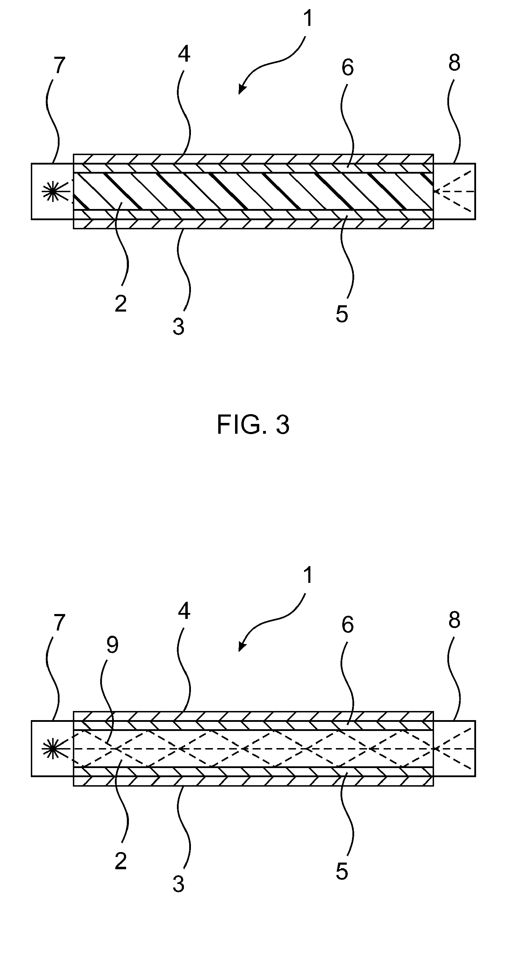

FIG. 3 zeigt ein weiteres optisches Modulationssystem. Der einzige Unterschied zu dem System aus FIG. 1 ist, dass zwischen den Elektroden 3, 4 und dem Lichtwellenleiter 2 nun diskrekte Mantelschichten 5 und 6 angeordnet sind, deren Material einen niedrigeren Brechungsindex für Licht der im Lichtwellenleiter 2 weitergeleiteten Wellenlänge aufweist als das dielektrische Elastomer des Lichtwellenleiters 2. Auf diese Weise kommt es an den Grenzflächen zwischen Lichtwellenleiter 2 und Mantelschichten 5 und 6 zur Totalreflektion.

Der schematische Strahlengang ist analog zu FIG. 2 in FIG. 4 gezeigt. Auch hier ist es selbstverständlich möglich, dass Lichtquelle 7 und/oder Detektor 8 zum Lichtwellenleiter 2 beabstandet angeordnet sind, so dass ein Spalt zwischen Lichtquelle 7 und/oder Detektor 8 einerseits und Lichtwellenleiter 2 andererseits gebildet wird.

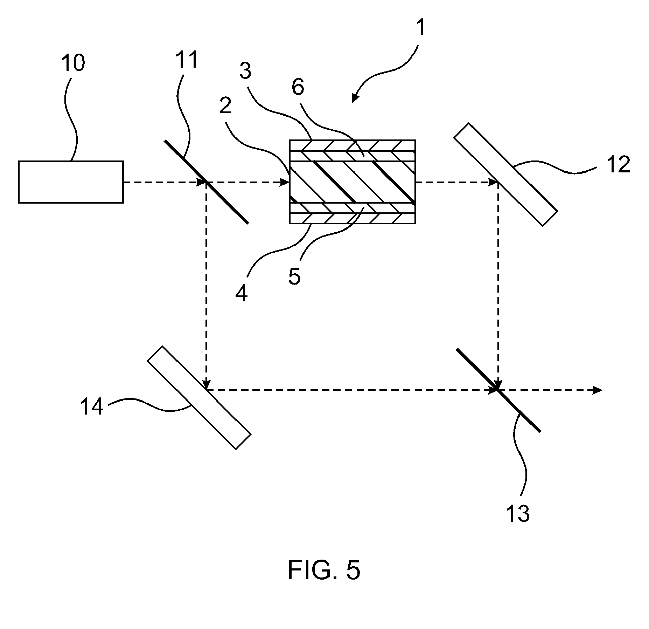

FIG. 5 zeigt den schematischen Aufbau eines Mach-Zehnder-Interferometers mit optischem Modulationssystem 1, Lichtquelle 10, Strahlteilern 11 und 13 sowie Spiegeln 12 und 14. Wie bereits zuvor geschildert umfasst das Modulationssystem Lichtwellenleiter 2, Elektroden 3 und 4 sowie Mantelschichten 5 und 6.

Die Lichtquelle 10, beispielsweise ein Laser, sendet einen Lichtstrahl aus, der zunächst auf den ersten Strahlteiler 11 trifft. Dieser Strahlteiler kann ein teildurchlässiger Spiegel sein. Ein Teil des Lichtstrahls trifft auf den Spiegel 14, von wo aus er zum zweiten Strahlteiler 13 reflektiert wird. Auch der zweite Strahlteiler 13 kann ein teildurchlässiger Spiegel sein.

Derjenige Teilstrahl, der nicht vom ersten Strahlteiler 11 reflektiert wird, tritt durch das optische Modulationssystem 1 hindurch. In dem in FIG. 5 gezeigten Fall verläuft der Teilstrahl nur durch den Lichtwellenleiter 2 des optischen Elements 1 und nicht durch die Elektroden 3, 4 und Mantelschichten 5, 6. Auf diese Weise müssen diese nicht transparent für den Teilstrahl sein. Nach dem Austreten aus dem Lichtwellenleiter 2 wird dieser Teilstrahl vom Spiegel 12 zum zweiten Strahlteiler 13 reflektiert. An diesem zweiten Strahlteiler 13 findet eine Überlagerung der beiden Teilstrahlen statt, so dass ein resultierender Lichtstrahl erhalten wird.

Durch anlegen einer elektrischen Spannung an das dielektrische Elastomer des Lichtwellenleiters 2 mittels der Elektroden 3, 4 kommt es zu einer Kontraktion des Elastomers und somit zu einer Vergrößerung des innerhalb des Lichtwellenleiters 2 durch den Teilstrahl zurückgelegten Weges. Abhängig vom Material kann es auch noch zu einer Änderung der Brechzahl des Elastomers kommen. Insgesamt ändert sich die optische Weglänge dieses Teilstrahls. Dann können bei der Überlagerung der beiden Teilstrahlen Interferenzmuster beobachtet werden.

## Patentansprüche

1. Optisches Modulationssystem (1), umfassend einen zur Einkoppelung, Weiterleitung und Auskoppelung von Licht eingerichteten Lichtwellenleiter (2),
**dadurchgekennzeichnet, dass**
das Material des Lichtwellenleiters (2) ein dielektrisches Elastomer umfasst und
das Modulationssystem weiterhin zwei an gegenüberliegenden Seiten des dielektrischen Elastomers angeordnete Elektroden (3, 4) umfasst,
wobei zumindest teilweise zwischen den Elektroden (3, 4) und dem Lichtwellenleiter (2) Mantelbereiche (5, 6) angeordnet sind, deren Material einen niedrigeren Brechungsindex für Licht der im Lichtwellenleiter (2) weitergeleiteten Wellenlänge aufweist als das dielektrische Elastomer des Lichtwellenleiters (2) und
wobei die optische Weglänge in dem zwischen den Elektroden (3, 4) angeordneten dielektrischen Elastomer durch Anlegen einer elektrischen Spannung an die Elektroden (3, 4) veränderbar ist.

2. Optisches Modulationssystem nach Anspruch 1,
**dadurchgekennzeichnet, dass**
das dielektrische Elastomer ausgewählt ist aus der Gruppe umfassend Polyurethan-Elastomere, Silikon-Elastomere und/oder Acrylat-Elastomere.

3. Optisches Modulationssystem nach Anspruch 1 oder 2,
**dadurchgekennzeichnet, dass**
das Material der Elektroden (3, 4) ausgewählt ist aus der Gruppe umfassend Metalle, Metalllegierungen, leitfähige Oligo- oder Polymere, leitfähige Oxide und mit leitfähigen Füllstoffen gefüllten Polymeren oder Kombinationen daraus.

4. Optisches Modulationssystem nach einem der Ansprüche 1 bis 3,
**dadurchgekennzeichnet, dass**
die Elektroden (3, 4) zumindest teilweise in direktem Kontakt mit dem dielektrischen Elastomer des Lichtwellenleiters (2) angeordnet sind und das Material der Elektroden (3, 4) einen niedrigeren Brechungsindex für Licht der im Lichtwellenleiter (2) weitergeleiteten Wellenlänge aufweist als das dielektrische Elastomer des Lichtwellenleiters (2).

5. Optisches Modulationssystem nach einem der Ansprüche 1 bis 4,
**dadurchgekennzeichnet, dass**
am Ort des Einkoppelns von Licht in den Lichtwellenleiter (2) und/oder am Ort des Auskoppelns von Licht aus dem Lichtwellenleiter (2) ein Spalt zwischen dem Lichtwellenleiter (2) und dem übrigen Modulationssystem vorgesehen ist.

6. Mach-Zehnder-Interferometer, umfassend ein optisches Modulationssystem nach einem der Ansprüche 1 bis 5.

7. Verfahren zum Betreiben eines optischen Modulationssystems, umfassend die Schritte:
Bereitstellen eines optischen Modulationssystems nach einem der Ansprüche 1 bis 5;
Einkoppeln von Licht in den Lichtwellenleiter (2); und
Anlegen einer elektrischen Spannung an das dielektrische Elastomer des Lichtwellenleiters (2) mittels der Elektroden (3, 4),
wobei die elektrische Spannung ausreichend ist, um eine Veränderung der Schichtdicke und/oder des Brechungsindexes des Lichtwellenleiters (2) zu bewirken.

8. Verfahren nach Anspruch 7,
**dadurchgekennzeichnet, dass**
das eingekoppelte Licht zwei Intensitätsmaxima mit einer ersten Wellenlänge λ₁ und einer zweiten Wellenlänge λ₂ umfasst,
wobei beim Anlegen einer ersten elektrischen Spannung an das dielektrische Elastomer des Lichtwellenleiters (2) die Transmission des Lichtwellenleiters (2) für Licht der Wellenlänge λ₁ größer ist als für Licht der Wellenlänge λ₂ ist und
wobei beim Anlegen einer zweiten, von der ersten verschiedenen elektrischen Spannung an das dielektrische Elastomer des Lichtwellenleiters (2) die Transmission des Lichtwellenleiters (2) für Licht der Wellenlänge λ₂ größer ist als für Licht der Wellenlänge λ₁ ist.

9. Verfahren nach Anspruch 7 oder 8,
**dadurchgekennzeichnet, dass**
die an das dielektrische Elastomer des Lichtwellenleiters (2) angelegte elektrische Spannung während des Betriebes des optischen Modulationssystems zeitlich veränderlich ist.

10. Verwendung eines optischen Modulationssystems nach einem der Ansprüche 1 bis 5 oder eines Interferometers nach Anspruch 6 als durchstimmbares Interferenzfilter, optischer Schalter und/oder Intensitätsmodulator.
